# EUROPEAN PATENT APPLICATION

(11) **EP 3 984 877 A1**
(43) Date of publication of application: **20.04.2022**
(21) Application number: 20202619.1
(22) Date of filing: 19.10.2020
(51) Int. Cl.: B63B 39/02, G05D 1/08

(54) **SYSTEMS AND METHODS FOR VESSEL STABILISATION**

(71) Applicant: Dacoma ApS, 5700 Svendborg (DK)
(72) Inventor: Baurichter, Arnd Friedrich, 5700 Svendborg (DK)
(74) Representative: Dragsted Partners A/S

(57) **Abstract**

A method of stabilising a marine vessel having a stabiliser system is provided. The method comprises receiving real-time vessel motion data from at least one vessel motion sensor, generating one or more primary control signals based on the vessel motion data by means of a primary non-linear control system and generating one or more secondary control signals based on the vessel motion data by means of a secondary linear control system. The method further comprises selecting either the primary control signals or the secondary control signals and transmitting the selected control signals to the vessel stabiliser system.

## Description

### Technical Field

The present invention relates to control systems and methods for vessel stabilisation. More particularly, the present invention relates to adaptive stabiliser systems and methods for improving the stability of vessels, especially fast and light marine vessels.

### Background

Marine vessels may be equipped with stabiliser systems in order to reduce ship motions caused by waves and the wind. Such stabiliser systems can be of active or passive character, such as gyroscopic devices, ballast tanks, etc. One particularly advantageous stabiliser system is the Airkeel, developed by the same applicant and constructed as a submerged, air-filled flotation body mounted at the bottom of the hull of the vessel. By dynamically moving the Airkeel from side to side, the vessel will be stabilised against roll motion. Another example of an active stabiliser system is one or more fins mounted beneath the waterline and emerging laterally from the hull. By changing the angle of the fins, a force is exerted counteracting and reducing the roll of the vessel.

Implementing stabiliser systems in marine vessels is often difficult because of external and internal forces impacting the system. Wind and waves result in ship motions that in the extremes can be catastrophic for the stability of a ship. Internal surfaces of fluids in e.g. water or fuel tanks, weight distribution of cargo, payload or moving passengers will all have an impact on the total inertia of the vessel and hence change its reaction to external forces.

Modern stabiliser systems are often controlled by means of open-loop or closed-loop linear feedback systems, e.g. using PID controllers. Due to nonlinearities of the control parameters related to internal and/or external forces, safe and most efficient operation in the whole operational range of the vessel is merely impossible.

This situation provides a number of drawbacks within the marine industry. As one example only, bad weather can prevent access to offshore windmills as it will be difficult for crew transfer vessels to reach the windmill site without the service and installation staff getting seasick. Unless the weather conditions can guarantee safe arrival at the windmill site, the crew transfer vessels may be unable to depart whereby one or more windmills may be left non-operational. New stabilisation techniques could thus potentially allow crew transfer even during bad conditions.

In view of this, there is a need for improved systems and methods allowing for optimised stabilisation within the entire operational range of the vessel.

### Summary

It is an object of the invention to at least partly overcome one or more of the above-identified limitations. In particular, it is an object to apply artificial intelligence to actively provide control signals to an associated active stabiliser system.

To solve the above objects, a method of stabilising a marine vessel having a stabiliser system is provided. The method comprises receiving real-time vessel motion data from at least one vessel motion sensor, generating one or more primary control signals based on the vessel motion data by means of a primary non-linear control system, and generating one or more secondary control signals based on the vessel motion data by means of a secondary linear control system. The method further comprises selecting either the primary control signals or the secondary control signals and transmitting the selected control signals to the vessel stabiliser system.

According to a second aspect, a method of stabilising a marine vessel having a stabiliser system is provided. The method comprises receiving real-time vessel motion data from at least one vessel motion sensor and selecting one of a primary non-linear control system and a secondary linear control system. The method further comprises generating one or more primary control signals or one or more secondary control signals based on the vessel motion data, dependent on the selected primary or secondary control system, and transmitting the generated primary or secondary control signals to the vessel stabiliser system.

For the first and second aspects, the step of generating one or more primary control signals based on the vessel motion data by means of the primary non-linear control system may be performed by a neural network receiving input representing a current state, and outputting a selected action, wherein said primary control signal(s) is determined based on the selected action. Efficient adaptive control of the stabiliser system is thereby made possible.

The current state may be determined by inputting the vessel motion data to an agent being configured to outputting the current state based on predetermined parameters. By selecting the predetermined parameters as specific vessel type parameters and/or current operational parameters of the marine vessel, it is possible to configure the agent to be specifically designed for the particular vessel, thereby improving performance of the method. Yet further, it also allows for designing specific agents off-board the marine vessel by knowing the details of the intended marine vessel.

The primary control signals may correspond to specific control parameters for the associated stabiliser system, and the method may further comprise comparing the control parameters of the primary control signals with valid pre-set control parameters. Hence, a quality check is implemented whereby the primary control system is only allowed to operate within predetermined ranges to reduce the risk of uncontrolled behaviour of the primary control signals.

The step of transmitting the primary control signals to the vessel stabiliser system may be performed only if the control parameters of the primary control system are matched with the valid pre-set control parameters.

Generating one or more secondary control signals based on the vessel motion data by means of the secondary linear control system may be performed by means of a PID regulator. Hence, there is a backup for the primary control system which operates on standard control schemes. Yet further, the secondary control system may also function as the boundaries for the primary control system so that validation of the primary control signals can be performed by checking if the primary control signals represent a stabiliser control which is within the range of the PID controller of the secondary control system.

The method may further comprise training the primary non-linear control system by inputting training vessel motion data into an agent of a third non-linear control system, outputting an associated state from said agent based on predetermined parameters, determining the performance of the output state, optimising the agent of the third non-linear control system based on the determined performance and using the agent of the third non-linear control system as an agent of the first non-linear control system. Such training may be performed off-board the marine vessel, even in a laboratory environment. Hence, the third non-linear control system may be arranged remotely from the marine vessel.

The method may further comprise training the primary non-linear control system by inputting real-time vessel motion data to an agent of a fourth non-linear control system, outputting an associated state from said agent based on predetermined parameters, determining the performance of the output state, optimising the agent of the fourth non-linear control system based on the determined performance, and using the agent of the fourth non-linear control system as an agent of the first non-linear control system. Such fourth control system may be arranged on-board the marine vessel, so that training of the primary agent is performed in real time. Preferably, the boundaries or limits of the fourth control system is narrower than the boundaries or limits of the third control system, thereby ensuring that any training will not result in undesired behaviour of the primary control system.

According to a third aspect, a marine vessel stabiliser system is provided. The stabiliser system comprises means adapted to execute the steps of the method according to the first or second aspect.

According to a fourth aspect, a controller system for use in a marine vessel stabiliser system is provided. The controller system is configured to provide control signals to the marine vessel stabiliser system based on data from at least one associated vessel motion sensor, wherein the controller system comprises a primary non-linear control system and a secondary linear control system. The controller system further comprises means for allowing the primary control system or the secondary control system to generate control signals to an associated vessel stabiliser system.

According to a fifth aspect, a computer programme product is provided. The computer programme product comprises instructions to cause the stabiliser system of the third aspect to execute the steps of the method according to the first or second aspect.

According to a sixth aspect, a computer-readable medium is provided having stored thereon the computer programme of the fifth aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which:
Fig. 1 is an isometric view of a marine vessel being provided with a stabiliser system according to an embodiment,
Fig. 2 is a schematic view of an on-board stabiliser system according to an embodiment,
Fig. 3 is a schematic view of an on-board controller system according to an embodiment, forming part of the stabiliser system of Fig. 2;
Fig. 4 is a schematic view of a controller system according to another embodiment, forming part of a stabiliser system, and
Fig. 5 is a schematic view of an adaptive control method for vessel stabilisation, according to an embodiment.

### Detailed Description

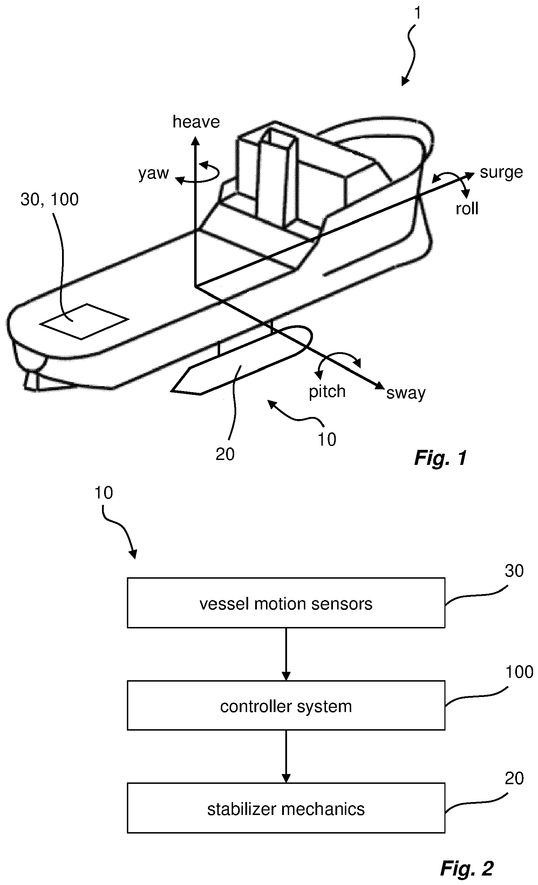

Starting in Fig. 1, an embodiment of a marine vessel 1 is schematically shown. The marine vessel 1 could be of any type of sea ship, such as fast and light vessels for crew transport, yachts, etc. It comprises the typical constructional features of marine vessels such as at least one hull, a keel, one or more decks, and some means for propulsion such as one or more motors, sails, etc. The marine vessel 1 is further provided with a stabiliser system 10.

During motion, the marine vessel 1 will move in six degrees of motion, as indicated in Fig. 1; heave, sway, surge, roll, pitch and yaw. Heaving is the linear motion along the vertical Z-axis, swaying is the linear motion along the transverse Y-axis, and surging is the linear motion along the longitudinal X-axis. Rolling is a rotation around a longitudinal axis, pitching is a rotation around the transverse axis, and yawing is a rotation around the vertical axis. The purpose of the stabiliser system 10 is to reduce the roll of the marine vessel 1, which occurs mainly because of wind and waves.

In the shown example of Fig. 1, the stabiliser system 10 is in the form of an Airkeel 20, developed by the same applicant and described further in the background section of the present application. The Airkeel 20 forms a mechanical device which can be controlled during operation of the vessel 1 in order to reduce the undesired roll. It should be noted that although the Airkeel 20 is a preferred device for use with the stabiliser system 10, other examples are also possible as long as they include some kind of mechanical device and an associated drive system which allows for adjustment of the mechanical device based on the motion of the vessel 1. As one possible example, the stabiliser system 10 may include one or more fins, which are well known in the art. Fins are controlled either by controlling their retraction/protrusion relative the hull, and their respective angle of attack. The Airkeel 20, on the other hand, is controlled by adjusting its angle relative the vertical axis.

The general design of the stabiliser system 10 is shown schematically in Fig. 2. It comprises one or more vessel motion sensors 30, a controller system 100, and the stabiliser mechanics 20. As the marine vessel 1 is moving, the one or more vessel motion sensors 30 provide sensor data corresponding to the actual motions of the vessel 1, preferably in relation to the six degrees of motion mentioned above. Hence, the one or more vessel motion sensors 30 provide real-time data of at least one of the heave, sway, surge, roll, pitch, and yaw motions.

The controller system 100 receives the sensor data and generates control signals for the stabiliser mechanics 20 of the stabiliser system 100. The stabiliser mechanics 30 will adjust its position and/or configuration based on the control signals, whereby the undesired motions of the marine vessel 1 are reduced.

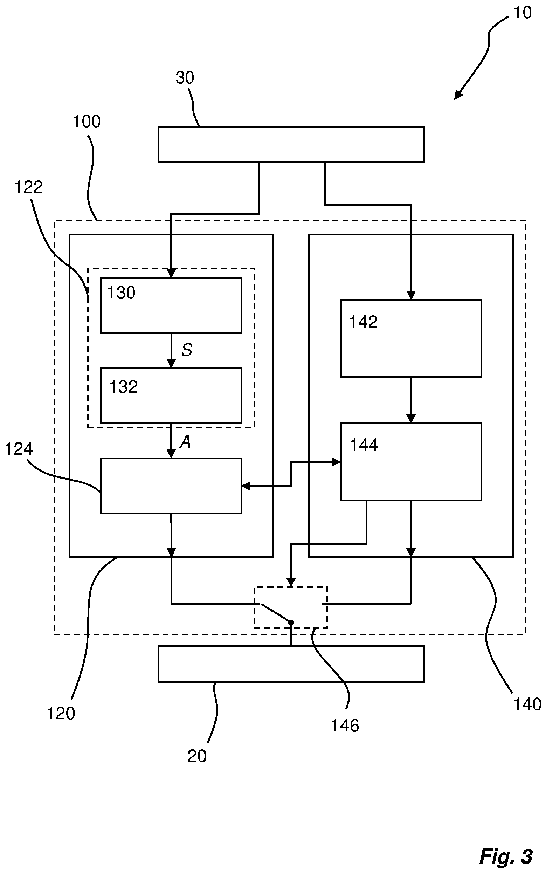

The controller system 100 is further shown in Fig. 3. The controller system 100 is configured to receive input in the form of vessel motion data and to generate one or more control signals for the stabiliser mechanics 20 of the stabiliser system 10.

The controller system 100 comprises a primary control system 120 and a secondary control system 140. The primary control system 120 and the secondary control system 140 together form a redundant dual controller system 100. In a preferred embodiment, the dual controller system 100 is generic to various stabiliser systems 100 on the market; hence, the controller system 100 can be configured to fit with various marine vessels and with various different stabiliser mechanics 20.

The primary control system 120 is an adaptive, non-linear control system, while the secondary control system 140 is a linear control system.

Starting with the primary control system 120, it is preferably implemented as an independent computer system arranged on-board the marine vessel 1. The primary control system 120 comprises an input module 122 and an output module 124. The input module 122 is configured to receive the sensor data representing the actual motion of the marine vessel 1 and to determine one or more actions for improving stability of the marine vessel 1. The output module 124 is configured to receive the determined actions from the input module 122 and to generate one or more control signals for the stabiliser mechanics 20 of the stabiliser system 10.

The input module 122 is adaptive and is preferably implemented as an agent 130 and a neural network 132. The agent 130 is configured to determine a current state S of the marine vessel 1 and to input the current state S to the neural network 132. From the current state S, the neural network is configured to determine a suitable action A. The output module 124 is configured to convert the received action A to corresponding control signals for the stabiliser mechanics 20.

The agent 130 is preferably configured by a set of data representing stored instructions on how the agent 130 will act upon external and internal disturbances. Preferably, the agent 130 is configured explicitly for the specific marine vessel type, as well as on the specific operational environment such as equipment, load, etc.

The current state S is thereby determined by the agent 130 by receiving the actual motion data from the vessel sensors 30 and by applying the received motion data to the pre-defined set of data of the agent 130.

The neural network 132 is configured as a decision maker able to determine the desired action *A* based on the observed state S. This may be performed by applying one or more policies, for example by determining a Q-value for every possible action *A* and by determining the action *A* having the highest Q-value. Another option is to estimate an action *A* from previous training data.

The secondary control system 140 is preferably based on another, independent computer system arranged on-board the marine vessel 1 and hosting a conventional, state-of-the-art PID system.

The secondary control system 140 comprises an input module 142 and an output module 144. The input module 142 is configured to receive the sensor data representing the actual motion of the marine vessel 1 and to calculate control actions for improving stability of the marine vessel 1 by means of e.g. a PID controller. The output module 144 is configured to generate one or more control signals for the stabiliser mechanics 20 of the stabiliser system 10.

During operation, the one or more sensors 30 detect the 6-dimensional motions and velocities of the marine vessel 1. The sensor signal is transmitted to both input modules 122, 142 of the primary and secondary control systems 120, 140. Per default, the primary control system 120 is responsible for providing the control signals to the stabiliser mechanics 20. However, the secondary control system 140 acts as a back-up control system. This allows a user to manually switch the primary control system 120 on or off. If the primary control system 120 is manually deactivated by a user, the secondary control system 140 will be responsible for generating control signals to the stabiliser mechanics 20.

On the other hand, if no manual deactivation of the primary control system 120 is performed, the redundant secondary control system 140 checks the primary control system 120 for consistency. If any of the generated control signals are out of range, the secondary control system 140 automatically takes over the stabiliser control by generating the control signals. Hence, the secondary control system 140 is configured as a safety check, as well as a switch 146 for the controller system 100.

In a preferred embodiment, the controller system 100 is always active, even if deactivation of the stabiliser mechanics 20 is initiated. There may be various reasons when it is determined to deactivate the stabiliser mechanics 20 in order to reduce the risk for unwanted behaviour of the marine vessel 1. However, in such cases it is preferred that the controller system 100 remains active, continuously monitoring the vessel motion. Even if there is no active stabiliser mechanics 20, the controller system 100 may still be in operation to use actual vessel motion data for real-time training or for storing the vessel motion data for later processing and learning processes. Once the stabiliser mechanics 20 is activated, the controller system 100 may be immediately operational to provide valid control signals to the stabiliser mechanics 20.

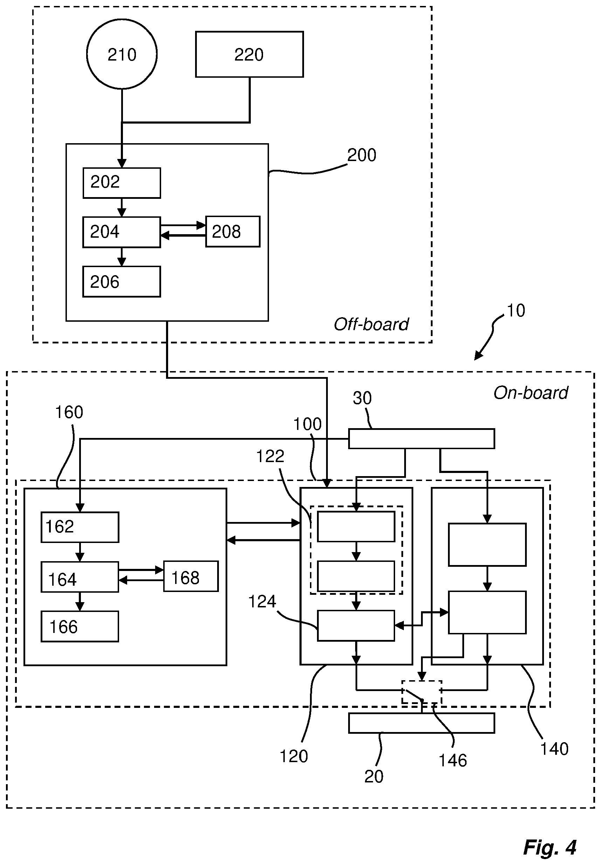

In Fig. 4, an embodiment of a stabiliser system 10 is shown. As for the embodiment described previously with reference to Fig. 3, the stabiliser system 10 comprises one or more marine vessel motion sensors 30, a stabiliser mechanics 20, and an on-board controller system 100 for controlling the operation of the stabiliser mechanics 20 based on real-time sensor data.

In this embodiment, a third control system 200 forms part of the stabiliser system 10. The third control system 200 is arranged off-board the marine vessel 1 and provides a training environment for the on-board controller system 100 and in particular to the primary control system 120.

The third control system 200 is implemented as a computer system hosting an agent 202, a neural network 204, and an output module 206. The agent 202 and the neural network 204 form an input module to the third control system 200. The agent 202 receives input in the form a marine vessel data 210, as well as training data representing vessel motion data. An optimiser 208 communicates with the neural network 204 for improving the decision-making of the neural network 204. Such optimiser 208 may e.g. be configured to implement reinforcement learning or other learning schemes, by assigning rewards or penalties to the neural network 204. In one embodiment, for each action the neural network 204 decides on, the optimiser 208 returns a reward to the neural network 204 which thereby adapts according to some pre-defined decision-making policies.

The third control system 200 is preferably configured in a laboratory environment, thereby allowing the manufacturer to approve the third control system 200 for operation. Upon such approval, the agent 202 as well as the neural network 204 of the third control system 200 are implemented as the agent 130 and the neural network 132 of the primary control system 120 on-board the vessel 1.

In an embodiment, the on-board controller system 100 further comprises a fourth control system 160. The fourth control system 160 is similar to the third control system 200 in that it comprises an agent 162, a neural network 164, an output module 166, and an optimiser 168. The optimiser 168 is preferably set by narrower limits as compared to the external third control system 200, and the fourth control system 160 can thus be active during operation of the marine vessel 1 to improve machine learning on-board the marine vessel 1. For example, as the neural network 164 and/or the agent 162 of the fourth control system 160 is updated by the optimiser 168 rewarding the neural network 164, it is programmed to replace the agent 130 and/or the neural network 132 of the primary control system 120.

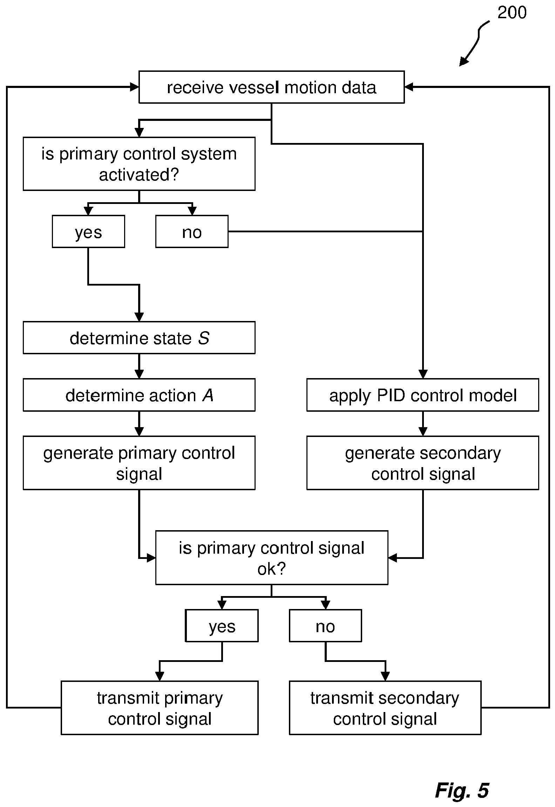

An on-board method 200 for stabilising a marine vessel 1 during operation is further described with reference to Fig. 5. The method 200 is preferably repeated during operation of the marine vessel 1 in order to continuously apply stabilising action to the marine vessel 1. Initially, the method 200 performs a step of receiving marine vessel motion data from one or more on-board sensors. Upon such receipt, the method continues by checking if the primary control system is active or not. If the primary control system is active, the method 200 transmits the received sensor data to the primary control system as well as to the secondary control system. If the primary control system is deactivated, e.g. by a user manually deactivating it, the received sensor data is transmitted only to the secondary control system.

The primary control system and the secondary control system handle the received input independently of each other. As explained earlier, the primary control system applies artificial intelligence and machine learning to provide control signals. In more detail, the agent of the primary control system is configured to determine a current state *S* of the stabiliser system. By means of the neural network, a desired action *A* is determined, which action *A* is used to determine primary control signals for the stabiliser mechanics of the stabiliser system.

In parallel, the secondary control system applies a PID control model to determine suitable control parameters, and the secondary control system thereby generates secondary control signals. As the secondary control system applies a control model which is different from the adaptive approach provided by the primary control system, the primary control signals will likely not be identical to the secondary control signals.

Once the primary control signals are generated, a safety check is performed by validating the range of the primary control signals. This may e.g. be performed by comparing the control parameters of the primary control signals with the control parameters of the secondary control signals and determining if the primary control parameters are within a pre-determined range of the secondary control parameters. If the control parameters of the primary control signals are determined to be applicable, these are transmitted to the stabiliser mechanics for performing the requested stabilisation action to the marine vessel. On the other hand, if the control parameters of the primary control signals are determined to be outside what is tolerable, the secondary control signals are instead transmitted to the stabiliser mechanics for performing the requested stabilisation action to the marine vessel.

From the description above follows that, although various embodiments of the invention have been described and shown, the invention is not restricted thereto, but may also be embodied in other ways within the scope of the subject-matter defined in the following claims.

## Claims

1. A method of stabilising a marine vessel having a stabiliser system, the method comprising:
- receiving real-time vessel motion data from at least one vessel motion sensor,
- generating one or more primary control signals based on the vessel motion data by means of a primary non-linear control system,
- generating one or more secondary control signals based on the vessel motion data by means of a secondary linear control system,
- selecting either the primary control signals or the secondary control signals, and
- transmitting the selected control signals to control stabiliser mechanics of the vessel stabiliser system.

2. A method of stabilising a marine vessel having a stabiliser system, the method comprising:
- receiving real-time vessel motion data from at least one vessel motion sensor,
- selecting one of a primary non-linear control system and a secondary linear control system,
- generating one or more primary control signals or one or more secondary control signals based on the vessel motion data, dependent on the selected primary or secondary control system, and
- transmitting the generated primary or secondary control signals to control stabiliser mechanics of the vessel stabiliser system.

3. The method according to claim 1 or 2, wherein generating one or more primary control signals based on the vessel motion data by means of the primary non-linear control system is performed by a neural network receiving input representing a current state and outputting a selected action, wherein said primary control signal(s) is determined based on the selected action.

4. The method according to claim 3, wherein the current state is determined by inputting the vessel motion data into an agent being configured to outputting the current state based on predetermined parameters.

5. The method according to claim 4, wherein said predetermined parameters are specific vessel type parameters and/or current operational parameters of the marine vessel.

6. The method according to any of the preceding claims, wherein said primary control signals corresponds to specific control parameters for the associated stabiliser system, and wherein the method further comprises comparing the control parameters of the primary control signals with valid pre-set control parameters.

7. The method according to claim 6, wherein the step of transmitting the primary control signals to the vessel stabiliser system is performed only if the control parameters of the primary control system are matched with the valid pre-set control parameters.

8. The method according to any of the preceding claims, wherein generating one or more secondary control signals based on the vessel motion data by means of the secondary linear control system is performed by means of a PID regulator.

9. The method according to any of the preceding claims, further comprising training the primary non-linear control system by inputting training vessel motion data to an agent of a third non-linear control system, outputting an associated state from said agent based on predetermined parameters, determining the performance of the output state, optimising the agent of the third non-linear control system based on the determined performance and using the agent of the third non-linear control system as an agent of the first non-linear control system.

10. The method according to claim 9, wherein the third non-linear control system is arranged remotely from the marine vessel.

11. The method according to any of the preceding claims, further comprising training the primary non-linear control system by inputting real-time vessel motion data to an agent of a fourth non-linear control system, outputting an associated state from said agent based on predetermined parameters, determining the performance of the output state, optimising the agent of the fourth non-linear control system based on the determined performance, and using the agent of the fourth non-linear control system as an agent of the first non-linear control system.

12. A marine vessel stabiliser system (10) comprising means (100) adapted to execute the steps of the method of any of the preceding claims.

13. A marine vessel (1) comprising a stabiliser system (10) according to claim 12.

14. A controller system (100) for use in a marine vessel stabiliser system (10), said controller system (100) being configured to provide control signals to the marine vessel stabiliser system (10) based on data from at least one associated vessel motion sensor (30), wherein the controller system (100) comprises a primary non-linear control system (120) and a secondary linear control system (140) and means for allowing the primary control system (120) or the secondary control system (120) to generate control signals to control stabiliser mechanics (20) of the associated vessel stabiliser system (10).

15. A computer programme product comprising instructions to cause the stabiliser system of claim 12 to execute the steps of the method of according to any of the preceding claims.

16. A computer-readable medium having stored there on the computer programme of claim 15.
